# EUROPÄISCHE PATENTSCHRIFT

(11) **EP 0 512 500 B1**
(45) Veröffentlichungstag und Bekanntmachung des Hinweises auf die Patenterteilung: **10.09.1997**
(21) Anmeldenummer: 92107631.1
(22) Anmeldetag: 06.05.1992
(51) Int. Cl.: G01N 27/417, G01N 27/407

(54) **Sauerstoff-Sensor und Verfahren zu seiner Herstellung**
Oxygen sensor and its method of manufacture
Capteur d'oxygène et son procédé de fabrication

(30) Priorität: 08.05.1991 DE 4115023
(43) Veröffentlichungstag der Anmeldung: 11.11.1992
(73) Patentinhaber: HOECHST AKTIENGESELLSCHAFT, 65926 Frankfurt am Main (DE)
(72) Erfinder: Aldinger, Fritz, Dr., W-6458 Rodenbach 2 (DE); Bestgen, Harro, Dr., W-6233 Kelkheim (Taunus) (DE); Köstler, Christine, Dr., W-6232 Bad Soden 3 (DE); Roosen, Andreas, Dr., W-6238 Hofheim am Taunus (DE)

(56) Entgegenhaltungen:
- EP-A- 0 148 622
- EP-A- 0 203 351
- WO-A-89/09933
- US-A- 3 920 172
- US-A- 4 378 279
- US-A- 4 810 529

## Beschreibung

Die vorliegende Erfindung betrifft einen planaren Sauerstoff-Sensor, der - in eine Lambda-Spannungssonde eingebaut - zur Messung des Sauerstoffgehaltes in Verbrennungsöfen oder in den Abgasen von Verbrennungsmotoren dienen kann. Die Erfindung betrifft ferner ein Verfahren zur Herstellung eines solchen planaren Sensors ausgehend von keramischen Folien auf Basis von Zirkondioxid.

Aus der EP-A 134 709 ist ein langgestreckter Sauerstoff-Sensor mit mehreren gestapelten ebenen Schichten eines Festkörper-Elektrolyts, insbesondere Zirkondioxid, bekannt, der einen durch mindestens zwei der Schichten begrenzten Hohlraum für eine Bezugssubstanz aufweist. Er enthält ferner eine Meßelektrode an einer Außenfläche und eine Bezugselektrode, die mit den Festkörper-Elektrolylschichten in Berührung steht und dem Hohlraum für die Bezugssubstanz zugekehrt ist. Eine Festkörper-Elektrolytschicht ist zwischen Meßelektrode und dem Hohlraum für die Bezugssubstanz angeordnet. Da der Hohlraum für die Bezugsubstanz bei dieser Sensor-Konstruktion nach außen hin nicht völlig abgeschlossen ist, ist für bestimmungsgemäße kontinuierliche Messungen unter variablen Bedingungen die Zuführung eines Referenzgases erforderlich. Dabei kann ein Wechsel der Luftzusammensetzung oder eine Verschmutzung des Referenzsystems zu Störungen führen. Die langgestreckte Form dieses Sensors erschwert darüber hinaus eine Miniaturisierung.

Untersuchungen haben ergeben, daß übliche Platinmetall enthaltende Siebdruckpasten Leiterbahnen ergeben, die porös und gasdurchlässig sind.

Die Aufgabe der Erfindung war es daher eine miniaturisierte, insbesondere planare, gasdichte Sensor-Konstruktion bereitzustellen, die es erlaubt, Platinmetall enthaltende Siebdruckpasten zur Herstellung der inneren Bezugselektrode und der damit verbundenen Leiterbahnen einzusetzen, und die universell für die kontinuierliche Sauerstoffbestimmung in Verbrennungsabgasen variabler Zusammensetzung und Temperatur geeignet ist.

Überraschend wurde nun ein Sauerstoffsensor auf Basis von Zirkondioxid gefunden, der einen wenigstens dreischichtigen Aufbau aus zwei Zirkondioxidaußenschichten und einer Zirkondioxidzwischenschicht besitzt und eine an einer Außenfläche einer Zirkondioxidaußenschicht angeordnete Meßelektrode aus Edelmetall und eine im Inneren angeordnete mit einem Außenkontakt verbundene Bezugselektrode aufweist. Dieser Sensor ist dadurch gekennzeichnet, daß die Zirkondioxidaußenschicht, die keine Außenelektrode trägt, ein Loch aufweist, das teilweise ausgefüllt ist durch eine Platinmasse, die den elektrischen Kontakt zwischen einer inneren Elektrodenschicht und einem durch das Loch nach außen führenden Platindraht herstellt, wobei der restliche Raum des Loches durch ein Glaslot ausgefüllt ist.

Die Bezugselektrode besteht aus einem inneren Standard in Kontakt mit einer Elektrode aus Platinmetall. Der innere Standard kann beispielsweise aus Nickel/Nickeloxid oder Palladium/Palladiumoxid bestehen. Die Verwendung des Vergleichsstandards Palladium/Palladiumoxyd als innerer Standard ist aus der DE-A 24 43 037 bekannt. Die Verwendung von Ni/NiO zur Erzeugung eines Bezugs-Sauerstoffpartialdrucks ist aus der DE-A 27 46 381 bekannt.

Als Material für die Meßelektrode und die Platinschicht der Bezugselektrode kommt Platin oder Platin/Rhodium in Frage.

Die Platin enthaltenden Pasten (A und B), mit der der Platindraht im Loch fixiert (A), bzw. mit der die im Inneren des Sensors zur Bezugselektrode führende Leiterbahn erzeugt wird (B), sind im Handel erhältlich. Die Paste zur Erzeugung des inneren Standards läßt sich aus Ni (C) bzw. Pd (D) herstellen. Die Pasten können zusätzlich organische Lösemittel (z.B. Terpineol) und organische Bindemittel (z.B. Ethylcellulose) enthalten. Vorzugsweise werden die Pasten B, C und D mit 5 bis 20 Gew.-% jenes Oxidgemisches vermischt, das zum Aufbau der Zirkondioxidschichten dient. Durch diesen Zusatz läßt sich bei der Paste B erreichen, daß beim Sintern die Platinmasse auf dem Zirkondioxid gut haftet und ebenso schwindet wie die Zirkondioxidmasse und daß auch die Pasten C und D für den inneren Standard gut auf der Pt-Schicht haften und ebenso schwinden wie die Zirkondioxidmasse.

Die Zirkondioxidmasse kann zusätzlich anorganische Dotierstoffe enthalten. Als anorganische Dotierstoffe kommen CaO, MgO, CeO und Y₂O₃ in Frage. Vorzugsweise wird die Zirkondioxidmasse mit Y₂O₃ dotiert. Auf diese Weise wird eine große Anzahl von Leerstellen für O²-Ionen erzeugt, die eine Ionenleitfähigkeit der Keramik bewirken. Im Bereich zwischen 3,5 bis 14,0 Gew.-% Y₂O₃, vorzugsweise von 5 bis 10 Gew.-%, bezogen auf die Gesamtmenge an Zirkondioxidmasse, ist die Ionenleitfähigkeit für einen Einsatz des Sensors in Lambda-Sonden ausreichend. Der Y-Gehalt verbessert ferner die Thermoschockstabilität des Sensors. Oxidmischungen mit 5 Gew.-% Y₂O₃ führen zu rein tetragonalen Körnern. Mischungen mit 10 Gew.-% Y₂O₃ führen zu einer Mischung aus tetragonalen und kubischen Körnern. In beiden Fällen wird durch eine sogenannte Umwandlungsverstärkung unerwünschte Rißausbreitung in der Keramik behindert oder ganz unterbunden. Der Einsatz eines Zirkondioxids, das Y₂O₃ enthält, ist u.a. aus der DE-A 35 37 709, der DE-A 35 43 818 und der DE-A 34 26 597 bekannt.

Das zum Abdichten der Platindrahtdurchführung verwendete Glaslot soll möglichst einen Wärmeausdehnungskoeffizienten aufweisen, der dem von ZrO₂ (1x10⁻⁵/K) entspricht. Verwendbar sind hierfür Gläser, die aus CaO, Al₂O₃, SiO₂ sowie gegebenenfalls PbO bestehen. Das Glaslot darf bei den Betriebstemperaturen des Sensors allenfalls eine unbedeutende Leitfähigkeit durch Transport von O²⁻-zeigen. Gehalte an ZrO₂ im Glas sind daher schädlich. Der Erweichungspunkt des Glaslotes soll bei 800 - 1400°C liegen, damit die von der Automobilindustrie gewünschte Funktionsfähigkeit eingehalten werden kann. Der Erweichungspunkt des Glaslotes liegt vorzugsweise um etwa 50°C - 100°C höher als die maximale Einsatztemperatur des Sensors. Für eine Einsatztemperatur bis 1000°C muß daher ein Glaslot eingesetzt werden, das bei 1050 - 1100°C sintert. Der Erweichungspunkt des Glaslotes liegt unter dem Schmelzpunkt des Platinmetalls der Pasten. Geeignete Gläser für das im Rahmen der Erfindung eingesetzte Glaslot sind beschrieben in der Veröffentlichung "Glas, Glaskeramik und Sinterglaskeramik", Chemie-Ingenieur-Technik 37 (1965), 1145. Ein besonders bevorzugtes Glas hat folgende Zusammensetzung: 45,8 Gew.-% SiO₂, 32,4 Gew.-% MgO und 21,8 Gew.-% Al₂O₃.

Auf der Außenseite des erfindungsgemäßen planaren Sensors, die der äußeren Meßelektrode gegenüberliegt, ist vorzugsweise ein elektrisches Heizelement angeordnet. Ein Heizelement erlaubt eine zuverlässige Sauerstoffbestimmung in Verbrennungsabgasen auch dann, wenn diese noch kalt sind oder eine bestimmte Temperatur noch nicht erreicht haben. Das Heizelement weist vorzugsweise einen schichtförmigen Aufbau auf. Dabei ist im Inneren einer elektrisch isolierenden Keramik, wie z.B. Al₂O₃, ein mäanderförmiger Heizleiter aus einem geeigneten schwer schmelzbaren Metall geringer Leitfähigkeit (z.B. Wolfram) vorhanden, der über zwei nach außen weisende Kontaktstifte mit einer Stromquelle verbunden werden kann. Dieses Heizelement kann mechanisch (z.B. durch eine Andruckfeder) mit dem erfindungsgemäßen Sensor verbunden werden. Falls der mit der Bezugselektrode verbundene Platindraht auf der gleichen Seite des Sensors angeordnet ist, kann es erforderlich werden, daß das Heizelement eine Ausnehmung aufweist, durch die der Platindraht geführt wird.

Für den Gebrauch wird der Sensor üblicherweise in eine rohrförmige Lambda-Sonde so eingebaut, daß die Schichtebenen senkrecht zur Rohrachse stehen. Die geometrischen Abmessungen des flächigen Sensors sind beliebig. Er kann beispielsweise rechteckig oder quadratisch sein. Zweckmäßig für den Einbau und deswegen bevorzugt ist eine etwa kreisrunde Form. Die Dicke des Sensors (ohne Heizelement) beträgt vorzugsweise etwa 1 bis 2 mm. Der Außendurchmesser beträgt vorzugsweise 5 - 10 mm.

In einer weiteren Ausgestaltung des erfindungsgemäßen Sensors weist zusätzlich auch die Zirkondioxidmittelschicht ein Loch auf, das an der Stelle des Loches der Zirkondioxidaußenschicht angeordnet ist und das ebenfalls teilweise ausgefüllt ist durch eine Platinmasse und durch ein Glaslot. Diese Ausgestaltung erlaubt es, die geometrische Anordnung der Bezugselektrode im Inneren des Sensors aus fertigungstechnischen Gründen zu variieren.

Gegenstand der Erfindung ist ferner ein Verfahren zur Herstellung eines planaren Sensors aus Zirkondioxid, der für die Messung des Sauerstoffgehaltes in den Abgasen von Verbrennungsmotoren oder Verbrennungsöfen geeignet ist und der im Inneren eine Bezugselektrode mit einer nach außen führenden elektrischen Leiterbahn und an einer Außenfläche eine Meßelektrode aus Edelmetall besitzt. Das Verfahren ist dadurch gekennzeichnet, daß man eine flüssige keramische Foliengießmasse, die organische Additive, insbesondere ein flüchtiges organisches Lösungsmittel, fein verteiltes Zirkondioxid und anorganische Dotierstoffe enthält, auf einer ebenen Unterlage ausgießt und dabei einen dünnen Film erzeugt, man den Film trocknet und von der Unterlage ablöst, man aus dem getrockneten Film mehrere gleich große Karten ausstanzt, die etwa den Abmessungen der späteren Sonde entsprechen, man in mindestens einer ersten Karte ein randnahes Loch stanzt und auf eine Oberfläche einer ersten Karte durch Aufdrucken einer Platinmetallpaste (B) eine vom Loch bis zum Mittenbereich der Karte verlaufende Leiterbahn aufbringt, man im Mittenbereich der Karte über der Leiterbahn eine Paste (C oder D) aufdruckt, die später einen inneren Standard bildet, man auf diese erste Oberfläche mindestens eine zweite Karte, die im Mittenbereich ein Loch hat, so aufbringt, daß die Paste (C oder D) für den inneren Standard durch sie umschlossen wird, man auf diese zweite Karte mindestens eine nicht gelochte dritte Karte so aufbringt, daß der teilweise mit Paste (C oder D) gefüllte Mittenbereich bedeckt wird, man in das randnahe Loch der ersten Karte etwas Platinmetallpaste (A) nahe der benachbarten zweiten Karte einbringt und dann in diese Paste einen Platinmetalldraht einbringt, dessen Querschnitt etwa 10 bis 80 % der Fläche des randnahen Loches ausfüllt, man diesen Kartenaufbau oxidierend bei 1400 bis 1600°C brennt, wobei die Karten zu einem Zirkonoxid-Sensor zusammensintern, man den vom Platinmetalldraht nicht ausgefüllten Raum des randnahen Loches mit einem pulverförmigen Glaslot vollständig ausfüllt und man den Sensor ein zweites Mal bei 800 bis 1400°C oxidierend brennt, wobei das Glaslot zu einem Glas zusammensintert, das das randnahe Loch gasdicht ausfüllt, man die nicht gelochte Oberfläche des Sensors im Siebdruckverfahren mit einer leitfähigen Platinmetallpaste (B) mindestens teilweise bis zum Rand bedruckt und den Sensor ein drittes Mal bei 800 bis 1000°C oxidierend brennt, wobei aus der Paste (B) die Meßelektrode entsteht.

Man kann auch, um die Anzahl der Brände zu verringern, die Platin enthaltende Paste (B) zur Erzeugung der äußeren Meßelektrode auf der lochfreien Oberfläche des Sensors bereits im Grünzustand der Karten aufbringen. Anstatt eine Paste aufzutragen, kann man an dieser Stelle das Platin auch aufsputtern oder mittels Chemical Vapor Deposition abscheiden. Ebenso können die erste, zweite und dritte Karte so groß ausgestanzt werden, daß im Mehrfachnutzen zwischen 30 und 50 Stück Sensoren, insbesondere 40 Stück Sensoren, gleichzeitig hergestellt und vor dem ersten Sinterbrand ausgestanzt werden können.

Die verwendete flüssige keramische Foliengießmasse enthält als organische Additive insbesondere Bindemittel, Dispergiermittel, ein flüchtiges Lösungsmittel (z.B. Trichlorethylen/Alkohol) und Weichmacher. Die zum Ausgießen verwendete Unterlage kann eine Stahlplatte, ein bewegliches Stahlband oder eine glatte Kunststoffolie, z.B. eine Polyesterfolie sein. Die Dicke des entstehenden Films beträgt etwa 0,2 bis 2 mm, vorzugsweise 0,4 - 0,8 mm. Eine konstante Schichtdicke des dünnen Films läßt sich durch Einsatz eines Gießschuhs erhalten. Das Trocknen des Films kann auch kontinuierlich geschehen. Die Abmessungen der ausgestanzten Karten schrumpfen im keramischen Brand je nach dem Volumenanteil an organischen Komponenten um 10 bis 30 %, insbesondere 22 bis 25 %.

Insgesamt werden mindestens drei Karten zur Herstellung des Sensors benötigt. Vorteilhafterweise verwendet man mindestens zwei erste Karten, mindestens eine zweite Karte und mindestens zwei dritte Karten.

Die Meßelektrode wird vorzugsweise teilweise mit einer dünnen, porösen, nicht leitenden Schutzschicht aus keramischen Material überzogen, um sie vor Verunreinigungen zu schützen. Beispielsweise kann man Mullit oder ein Spinell ergebendes Gemisch aus Al₂O₃ und MgO mit Hilfe eines thermischen Spritzverfahrens auf die Meßelektrode in dünner Schicht auftragen.

Der Durchmesser des randnahen Loches beträgt etwa 0,8 bis 2 mm, insbesondere 1,2 bis 1,5 mm. Der Abstand vom Rand beträgt mindestens 1 mm, vorzugsweise mindestens 1,5 mm. Die Gesamtfläche des Loches im Mittenbereich der ZrO₂-Zwischenschicht, das zur Herstellung der Bezugselektrode dient, soll mindestens 1 mm² betragen. Größere Querschnitte führen zu einer besseren Wirkungsweise des inneren Standards. Vorzugsweise ist das im Mittenbereich angeordnete Loch kreisrund. Die geometrische Form und Größe des Loches können der Fläche entsprechen, die auf der ersten Oberfläche der ersten Karte mit der Paste (C) oder (D) bedruckt wird.

Die Metallpaste zur Herstellung des inneren Standards kann als wesentlichen Bestandteil Palladium (C) aufweisen. Nach einem oxidierenden Brand liegt diese Paste als Metall/Metalloxidgemisch Pd/PdO vor. Man kann jedoch auch eine Paste auf Basis Nickelpulver (D) und organischen Zusätzen (Lösungsmittel, Bindemittel) einsetzen. Das hieraus im oxidierenden Brand entstehende Gemisch aus Ni/NiO ist ebenfalls als innerer Standard verwendbar. In beiden Fällen bildet sich über dem Metall/Metalloxid-Gemisch eine Atmosphäre mit einem definierten Sauerstoffpartialdruck und einer definierten Temperaturabhängigkeit aus.

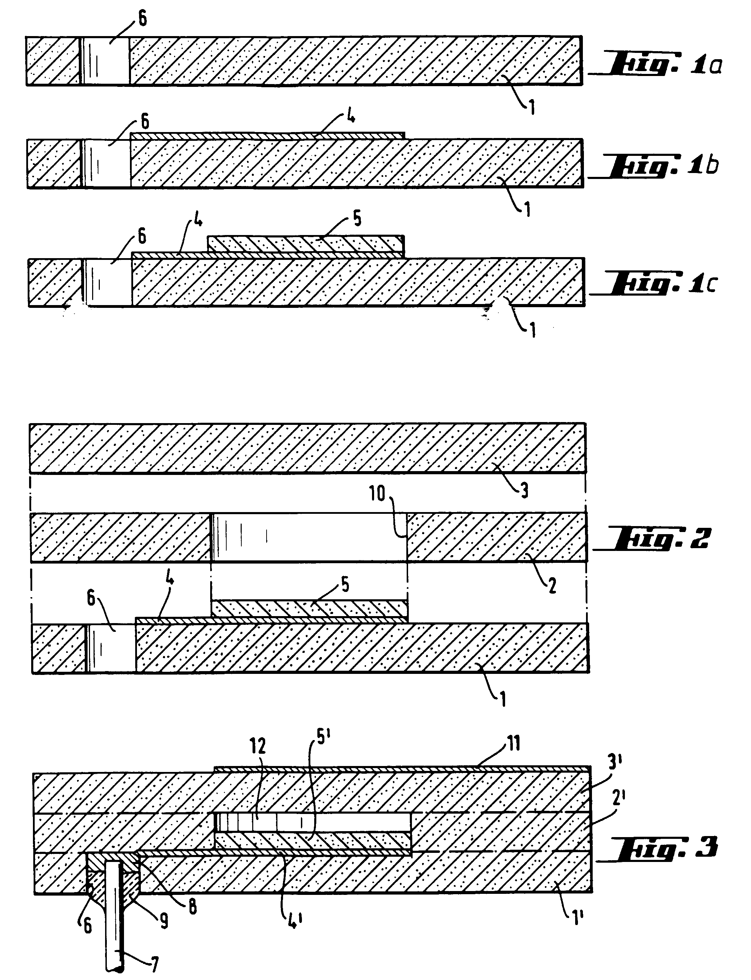

Die Erfindung wird nachfolgend an Hand der Figuren beispielhaft näher erläutert. Fig. 1 (a, b, c) zeigt die Herstellung einer grünen, mit Platinpaste beschichteten Folienkarte mit innerem Standard. Auf eine Folienkarte 1 mit einem Loch 6 im randnahen Bereich wird durch Siebdruck zunächst eine Bahn 4 einer Platin enthaltenden Paste und darauf eine Schicht 5 aufgebracht, aus der durch Erhitzen der innere Standard (z.B. Ni/NiO) entsteht. Die Bahn 4 erstreckt sich von dem randnahen Loch 6 bis zum Mittenbereich der Folienkarte 1. Die Schicht 5 kann z.B. durch Siebdruck erzeugt werden. Vorzugsweise hat die im Mittenbereich der Karte 1 aufgetragene Schicht 5 die Form einer runden Tablette und vorzugsweise hat die darunter liegende Bahn die gleiche Form und Größe.

Figur 2 zeigt in einer Explosionszeichnung, wie die Anordnung gemäß Fig. 1c zu einem grünen Sensor ergänzt wird. Dazu wurde zunächst auf die Anordnung gemäß Figur 1 c eine Folienkarte 2 aufgelegt, die im Mittenbereich ein Loch 10 aufweist. Anschließend wird eine weitere Folienkarte 3 ohne Loch aufgelegt, die gegebenenfalls bereits die äußere Meßelektrode aufweisen kann, und die so entstandene Anordnung wird zusammenlaminiert. Es ist vorteilhaft, den Bereich der Folienkarte 2, der dem Loch 6 gegenüber liegt, ebenfalls mit einer Platin enthaltenden Paste zu beschichten, um die elektrische Verbindung des Außenkontakts mit der inneren Bezugselektrode aus der Bahn 4 und der Schicht 5 zu verbessern.

Figur 3 zeigt einen senkrechten Schnitt durch einen fertigen Sensor in seitlicher Ansicht, insbesondere die Verbindung des Außenkontakts mit der Leiterbahn im Inneren des Sensors nach dem Brand.

Der Platindraht 7 endet in der Platinmasse 8, die nach dem Brennen aus der im Loch 6 eingebrachten Platin enthaltenden Paste (A) entstanden ist. Der Rest des Loches 6 wird von dem Glaslot 9 ausgefüllt, das durch Einfüllen eines Glaslot-Pulvers oder einer Glaslot-Paste oder Auflegen eines vorgepreßten Glaslot-Ringes nebst anschließendem Sintern entsteht. Die Leiterbahn 4', entstanden durch Einbrennen einer Platin enthaltenden Paste kann auch den Querschnitt des Loches 6 abdecken, was aber in der Figur 3 nicht dargestellt ist. Die Schicht 5 ist beim Brand in den inneren Standard 5' übergegangen. Die äußere Meßelektrode 11 wird in an sich bekannter Weise aufgebracht. Vorzugsweise erstreckt sie sich über der Bezugselektrode. Die einzelnen Schichten 1, 2 und 3 gehen beim Brand in einen zusammenhängenden Sinterkörper über, in dem die einzelnen gebrannten Schichten 1', 2' und 3' nur durch Anschleifen und Betrachten unter dem Mikroskop unterschieden werden können. Der Raum 12 über dem inneren Standard 5' ist mit Gas gefüllt und weist einen definierten, temperaturabhängigen Sauerstoffpartialdruck auf.

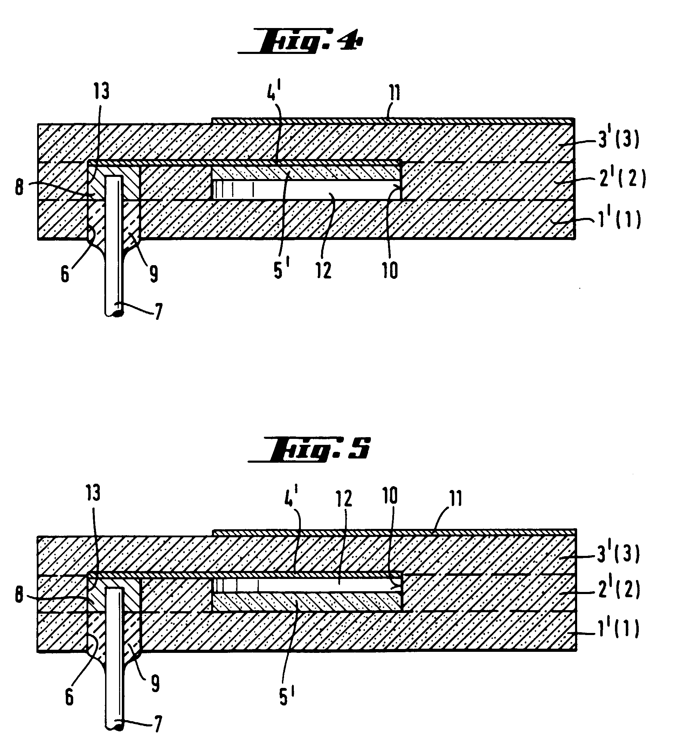

Figur 4 zeigt einen senkrechten Schnitt durch eine andere Ausführungsform eines Sensors in seitlicher Ansicht.

Bei der Ausführungsform nach Figur 4 weist die Karte 1 nur das seitlich angebrachte Loch 6 auf, während die Karte 2 neben dem Loch im Mittenbereich noch ein zusätzliches, seitlich angebrachtes Loch besitzt und die Karte 3 auf der der äußeren Meßelektrode 11 gegenüberliegenden Seite die durch Siebdruck aufgebrachte Bahn 4' aus Platin und darüber die Schicht 5' zur Erzeugung des inneren Standards trägt. Die Schritte des Laminierens, Sinterns, des Kontaktierens der Bezugselektrode mit einem Platindraht 7 und des Einbringens des Glaslotes 9 können wie beschrieben erfolgen und ergaben den dargestellten Sensor.

Die Figur 5 zeigt einen senkrechten Schnitt durch eine weitere Ausführungsform eines erfindungsgemäßen Sensors in seitlicher Ansicht. Gleiche Bezugsziffern haben in dieser Darstellung gleiche Bedeutung wie in den vorangegangenen Figuren. Der Unterschied der Ausführungsform nach Figur 5 gegenüber der Ausführungsform nach Figur 4 besteht darin, daß die Schicht 5', die den inneren Standard bildet, in unmittelbarem Kontakt mit der Folienkarte 1 steht, wohingegen die Bahn 4' in unmittelbarem Kontakt zu der die Meßelektrode 11 tragenden Folienkarte 3 steht.

## Patentansprüche

1. Planarer Sauerstoff-Sensor auf Basis Zirkondioxid für die Messung des Sauerstoffgehalts in Verbrennungsöfen oder in den Abgasen von Verbrennungsmotoren, der einen wenigstens dreischichtigen Aufbau aus zwei Zirkondioxidaußenschichten und einer Zirkondioxidzwischenschicht besitzt und eine an einer Außenfläche einer Zikondioxidaußenschicht angeordnete Meßelektrode aus Edelmetall sowie eine im Inneren angeordnete Bezugselektrode aufweist, die mit einem Außenkontakt leitend verbunden ist, dadurch gekennzeichnet, daß die Zirkondioxidaußenschicht, die keine Außenelektrode trägt, ein Loch aufweist, das teilweise ausgefüllt ist durch eine Platinmasse, die den elektrischen Kontakt zwischen einer inneren Elektrodenschicht und einem durch das Loch nach außen führenden Platindraht herstellt, wobei der restliche Raum des Loches durch ein Glaslot ausgefüllt ist.

2. Sauerstoff-Sensor gemäß Anspruch 1, dadurch gekennzeichnet, daß das Material der Zirkondioxidschichten zusätzlich 3,5 bis 14,0 Gew.-%, vorzugsweise 5 bis 10 Gew.-%, Y₂O₃ enthält.

3. Sauerstoff-Sensor gemäß Anspruch 1, dadurch gekennzeichnet, daß auf der Außenseite, die der äußeren Meßelektrode gegenüberliegt, ein elektrisches Heizelement angeordnet ist.

4. Sauerstoff-Sensor gemäß Anspruch 1, dadurch gekennzeichnet, daß er eine etwa kreisrunde geometrische Abmessung besitzt mit einem Außendurchmesser von 5 bis 10 mm und einer Dicke im Bereich von 1 bis 2 mm.

5. Sauerstoff-Sensor gemäß Anspruch 1, dadurch gekennzeichnet, daß zusätzlich auch die Zirkondioxidmittelschicht ein Loch aufweist, das an der Stelle des Loches der Zirkondioxidaußenschicht angeordnet ist und das ebenfalls teilweise ausgefüllt ist durch eine Platinmasse und durch ein Glaslot.

6. Verfahren zur Herstellung eines Sauerstoff-Sensors gemäß Anspruch 1, dadurch gekennzeichnet, daß man eine flüssige keramische Foliengießmasse, die fein verteiltes Zirkondioxid und anorganische Dotierstoffe sowie organische Additive enthält, auf einer ebenen Unterlage mit gleichmäßiger Schichtdicke ausgießt und dabei eine Filmdicke von 0,2 bis 2 mm einstellt, man den Film trocknet und von der Unterlage ablöst, man aus dem getrockneten Film mehrere, etwa gleich große Karten ausstanzt, die etwa den Abmessungen des späteren Sensors entsprechen, man in mindestens eine erste Karte ein randnahes Loch stanzt und auf eine Oberfläche einer ersten Karte eine vom Loch bis zum Mittenbereich der Karte verlaufende durchgehende Bahn einer Platin enthaltenden Paste (B) aufbringt, man im Mittenbereich der Karte über die durchgehende Bahn eine Paste (C oder D) aufbringt, die beim oxidierenden Brennen in einen inneren Standard übergeht, man auf diese erste Oberfläche mindestens eine zweite Karte, die im Mittenbereich ein Loch aufweist, so aufbringt, daß sie die Paste (C oder D) für den inneren Standard umschließt, man auf diese Karten mindestens eine ungelochte dritte Karte so aufbringt, daß der teilweise mit Paste (C oder D) gefüllte Mittenbereich bedeckt wird, man in das randnahe Loch der ersten Karten etwas einer Platin enthaltenden Paste (A) nahe der benachbarten zweiten Karte einbringt und dann in diese Paste (A) einen Platindraht einbringt, dessen Querschnitt etwa 10 bis 80 % der Fläche des randnahen Loches ausfüllt, man diesen Kartenaufbau oxidierend bei 1400 bis 1600°C brennt, wobei die Karten zu einem Zirkondioxid-Sensor zusammensintern und die durchgehende Bahn der Platin enthaltenden Paste (B) eine Leiterbahn und den Elektrodenteil der Bezugselektrode bildet, man den vom Platindraht nicht ausgefüllten Raum des randnahen Loches mit einem Glaslot in Kontakt bringt, man den Sensor ein zweites Mal bei 800 bis 1400°C oxydierend brennt, wobei das Glaslot zu einem Glas zusammensintert, das den Rest des randnahen Loches gasdicht ausfüllt, man mindestens 30 % der Fläche der kein Loch aufweisenden Seite des Sensors mit einer dünnen Schicht der Platin enthaltenden Paste (B) bedeckt und man den Sensor ein drittes Mal bei 800 bis 1000°C oxidierend brennt, wobei die Platin enthaltende Paste (B) zu einer leitfähigen Meßelektrode zusammensintert.

7. Verfahren zur Herstellung eines Sauerstoff-Sensors gemäß Anspruch 1, dadurch gekennzeichnet, daß man eine flüssige keramische Foliengießmasse, die fein verteiltes Zirkondioxid und anorganische Dotierstoffe sowie organische Additive enthält, auf einer ebenen Unterlage mit gleichmäßiger Schichtdicke ausgießt und dabei eine Filmdicke von 0,2 bis 2 mm einstellt, man den Film trocknet und von der Unterlage ablöst, man aus dem getrockneten Film mehrere, etwa gleich große Karten ausstanzt, die etwa den Abmessungen des späteren Sensors entsprechen, man in mindestens eine erste Karte ein randnahes Loch stanzt und auf eine Oberfläche einer ersten Karte eine vom Loch bis zum Mittenbereich der Karte verlaufende durchgehende Bahn einer Platin enthaltenden Paste (B) aufbringt, man im Mittenbereich der Karte über die durchgehende Bahn eine Paste (C oder D) aufbringt, die beim oxidierenden Brennen in einen inneren Standard übergeht, man auf diese erste Oberfläche mindestens eine zweite Karte, die im Mittenbereich ein Loch aufweist, so aufbringt, daß sie die Paste (C oder D) für den inneren Standard umschließt, man auf diese Karten mindestens eine ungelochte dritte Karte so aufbringt, daß der teilweise mit Paste (C oder D) gefüllte Mittenbereich bedeckt wird, man mindestens 30 % der Fläche der außenliegenden ungelochten Karte mit einer dünnen Schicht der Platin enthaltenden Paste (B) bedeckt, man in das randnahe Loch der ersten Karte etwas einer Platin enthaltenden Paste (A) nahe der benachbarten zweiten Karte einbringt und dann in diese Paste (A) einen Platindraht einbringt, dessen Querschnitt etwa 10 bis 80 % der Fläche des randnahen Loches ausfüllt, man diesen Kartenaufbau oxydierend bei 1400 bis 1600°C brennt, wobei die Karten zu einem Zirkonoxid-Sensor zusammensintern und die durchgehende Bahn der Platin enthaltenden Paste (B) eine Leiterbahn und den Elektrodenanteil der Bezugselektrode bildet und die Platin enthaltende Paste (B) zu einer leitfähigen Meßelektrode zusammensintert, man den vom Platindraht nicht ausgefüllten Raum des randnahen Loches mit einem Glaslot in Kontakt bringt, man den Sensor ein zweites Mal bei 800 bis 1400°C oxidierend brennt, wobei das Glaslot zu einem Glas zusammensintert, das den Rest des randnahen Loches gasdicht ausfüllt.

8. Verfahren nach Anspruch 6 oder 7, dadurch gekennzeichnet, daß man Platin enthaltende Pasten verwendet, die zusätzlich Zirkondioxid enthalten, vorzugsweise in einer Menge im Bereich von 5 bis 20 Gew.-%, besonders bevorzugt im Bereich von 7 bis 15 Gew.-%, bezogen auf das Gesamtgewicht der Platin enthaltenden Paste.

9. Verfahren nach Anspruch 6 oder 7, dadurch gekennzeichnet, daß man für den inneren Standard Paste verwendet, die einen Anteil von 5 bis 20 Gew.-%, vorzugsweise von 7 bis 15 Gew.-%, bezogen auf das Gesamtgewicht des nichtflüchtigen Anteils der Paste, an Zirkondioxid, das zur Herstellung der Foliengießmasse verwendet wird, einschließlich anorganischer Dotierstoffe enthält.

10. Verfahren nach Anspruch 6 oder 7, dadurch gekennzeichnet, daß man die leitfähige Fläche der Meßelektrode teilweise mit einer dünnen, porösen Schutzschicht aus einem nicht leitenden keramischen Material bedeckt.

## Claims

1. A planar oxygen sensor based on zirconium dioxide for measuring the oxygen content in combustion furnaces or in the exhaust gases of internal combustion engines, which has an at least three-layer structure composed of two zirconium dioxide external layers and a zirconium dioxide interlayer and has a noble-metal measuring electrode disposed on an external surface of a zirconium dioxide external layer and a reference electrode disposed in the interior and conductably connected to an external contact, wherein the zirconium dioxide external layer which does not carry an external electrode has a hole which is partially filled with a platinum mass which makes the electrical contact between an internal electrode layer and a platinum wire passing outwards through the hole, the remaining space of the hole being filled with a solder glass.

2. An oxygen sensor as claimed in claim 1, wherein the material of the zirconium dioxide layers additionally contains 3.5 to 14.0% by weight, preferably 5 to 10% by weight, of Y₂O₃.

3. An oxygen sensor as claimed in claim 1, wherein an electrical heating element is disposed on the outside side opposite the external measuring electrode.

4. An oxygen sensor as claimed in claim 1, which has a roughly circular geometrical dimension having an outside diameter of 5 to 10 mm and a thickness in the range from 1 to 2 mm.

5. An oxygen sensor as claimed in claim 1, wherein the zirconium dioxide central layer additionally also has a hole which is disposed at the position of the hole in the zirconium dioxide external layer and which is also partially filled with a platinum mass and with a solder glass.

6. A method of producing an oxygen sensor as claimed in claim 1, which comprises casting a liquid ceramic sheet casting mass containing finely divided zirconium dioxide, inorganic dopants and organic additives onto a flat substrate with uniform layer thickness and, in doing so, establishing a film thickness of 0.2 to 2 mm, drying the film and peeling it off the substrate, punching out of the dried film a plurality of approximately large cards which correspond roughly to the dimensions of the future sensor, punching a hole near the edge in at least a first card and applying to one surface of a first card a continuous track of a platinum-containing paste (B) extending from the hole to the central region of the card, applying a paste (C or D) over the continuous track in the central region of the card, which paste is later converted into an internal standard during oxidative firing, applying at least one second card having a hole in the central region to said first surface in such a way that it encloses the paste (C or D) for the internal standard, applying at least one unperforated third card to said cards in such a way that the central region partially filled with paste (C or D) is covered, introducing some platinum-containing paste (A) into the hole near the edge of the first card in the vicinity of the adjacent second card and then introducing into said paste (A) a platinum wire whose cross section fills about 10 to 80% of the area of the hole near the edge, firing said card structure oxidatively at 1400 to 1600°C, in which process the cards sinter together to form a zirconium dioxide sensor and the continuous track of the platinum-containing paste (B) forms a conductor track and the electrode part of the reference electrode, bringing the space of the hole near the edge not filled with platinum wire into contact with a solder glass, firing the sensor a second time oxidatively at 800 to 1400°C, in which process the solder glass sinters together to form a glass which fills the rest of the hole near the edge in a gastight manner, covering at least 30% of the area of the side of the sensor not having a hole with a thin layer of the platinum-containing paste (B) and firing the sensor a third time oxidatively at 800 to 1000°C, in which process the platinum-containing paste (B) sinters together to form a conductive measuring electrode.

7. A method of producing an oxygen sensor as claimed in claim 1, which comprises casting a liquid ceramic sheet casting mass containing finely divided zirconium dioxide, inorganic dopants and organic additives onto a flat substrate with uniform layer thickness and, in doing so, establishing a film thickness of 0.2 to 2 mm, drying the film and peeling it off the substrate, punching out of the dried film a plurality of approximately large cards which correspond roughly to the dimensions of the future sensor, punching a hole near the edge in at least a first card and applying to one surface of a first card a continuous track of a platinum-containing paste (B) extending from the hole to the central region of the card, applying a paste (C or D) over the continuous track in the central region of the card, which paste is later converted into an internal standard during oxidative firing, applying at least one second card having a hole in the central region to said first surface in such a way that it encloses the paste (C or D) for the internal standard, applying at least one unperforated third card to said cards in such a way that the central region partially filled with paste (C or D) is covered, covering at least 30% of the area of the outer unperforated card with a thin layer of the platinum-containing paste (B), introducing some platinum-containing paste (A) into the hole near the edge of the first card in the vicinity of the adjacent second card and then introducing into said paste (A) a platinum wire whose cross section fills about 10 to 80% of the area of the hole near the edge, firing this card structure oxidatively at 1400 to 1600°C, in which process the cards sinter together to form a zirconium dioxide sensor and the continuous track of the platinum-containing paste (B) forms a conductor track and the electrode part of the reference electrode and the platinum-containing paste (B) sinters together to form a conductive measuring electrode, bringing the space of the hole near the edge not filled with platinum wire into contact with a solder glass, firing the sensor a second time oxidatively at 800 to 1400°C, in which process the solder glass sinters together to form a glass which fills the rest of the hole near the edge in a gastight manner.

8. The process as claimed in claim 6 or 7, wherein platinum-containing paste is used which additionally contains zirconium dioxide, preferably in a quantity in the range of 5 to 20% by weight, particularly preferably in the range of 7 to 15% by weight, based on the total weight of the platinum-containing paste.

9. The process as claimed in claim 6 or 7, wherein, for the internal standard, paste is used which contains a proportion of 5 to 20% by weight, preferably of 7 to 15% by weight, based on the total weight of the non volatile proportion of the paste, of zirconium dioxide used to produce the sheet casting mass, including inorganic dopants.

10. The process as claimed in claim 6 or 7, wherein the conductive surface of the measuring electrode is partially covered with a thin, porous protective layer composed of a nonconducting ceramic material.

## Revendications

1. Capteur d'oxygène planar à base de dioxyde de zirconium pour la mesure de la teneur en oxygène des fours à combustion ou des gaz d'échappement de moteurs à combustion, qui possède au moins une construction à trois couches constituée de deux couches extérieures de dioxyde de zirconium et d'une couche intermédiaire de dioxyde de zirconium et qui présente une électrode de mesure en métal noble disposée au niveau d'une surface externe d'une couche externe de dioxyde de zirconium ainsi qu'une électrode de référence disposée à l'intérieur, qui est reliée de manière conductrice à un contact extérieur, caractérisé en ce que la couche externe de dioxyde de zirconium, qui ne porte aucune électrode externe, présente un trou, qui est partiellement rempli d'une masse de platine, qui assure le contact électrique entre une couche d'électrode interne et un fil de platine passant à travers le trou vers l'extérieur, dans lequel l'espace restant du trou est rempli d'une soudure de verre.

2. Capteur d'oxygène selon la revendication 1, caractérisé en ce que la matière des couches de dioxyde de zirconium contiennent en plus 3,5 à 14,0% en poids, de préférence 5 jusqu'à 10% en poids de Y₂O₃.

3. Capteur d'oxygène selon la revendication 1, caractérisé en ce que, sur le côté extérieur, qui se trouve au dessus de l'électrode de mesure externe, est disposé un élément chauffant électrique.

4. Capteur d'oxygène selon la revendication 1, caractérisé en ce qu'il possède une dimension géométrique approximativement circulaire avec un diamètre externe de 5 à 10 mm et une épaisseur comprise entre 1 et 2 mm.

5. Capteur d'oxygène selon la revendication 1, caractérisé en ce que la couche médiane de dioxyde de zirconium présente également en plus un trou, qui est disposé au niveau de la position du trou de la couche externe de dioxyde de zirconium et qui est également partiellement rempli d'une masse de platine et d'une soudure de verre.

6. Procédé de fabrication d'un capteur d'oxygène selon la revendication 1, caractérisé en ce qu'une masse fondue de feuille céramique liquide, qui contient du dioxyde de zirconium finement divisé et des substances dopantes inorganiques ainsi que des additifs organiques, est coulée sur un support plan avec une épaisseur de couche uniforme, et une épaisseur de film de 0,2 à 2 mm est ainsi réalisée, que le film est séché et détaché du support, et que plusieurs cartes de dimensions approximativement identiques, qui correspondent approximativement aux dimensions du capteur extérieur, sont découpées par matriçage à partir du film séché, un trou est pratiqué par perforation au moins dans une première carte proche du bord et une piste constituée d'une pâte contenant du platine (B) se prolongeant à partir du trou jusqu'à la zone médiane de la carte est déposée sur une surface d'une première carte, dans la zone médiane de la carte au-dessus de la piste traversante il est déposé une pâte (C ou D), qui au cours d'une calcination oxydante est transférée dans un étalon interne, sur cette surface il est déposé au moins une deuxième carte, qui présente dans la zone médiane un trou de sorte qu'elle entoure la pâte (C ou D) pour l'étalon interne, sur ces cartes il est déposé au moins une troisième carte non trouée, de façon à recouvrir partiellement la zone médiane de pâte (C ou D), une certaine quantité d'une pâte (A) contenant du platine est introduite dans le trou près du bord de la première carte au voisinage de la deuxième carte et qu'ensuite un fil de platine, dont la section remplit environ 10 à 80% de la surface du trou proche du bord, est introduit dans cette pâte (A), cette construction de cartes est calcinée avec oxydation entre 1400 et 1600°C, à la suite de quoi les cartes se réunissent par frittage en un capteur à base de dioxyde de zirconium et la piste traversant de la pâte contenant du platine (B) forme une piste conductrice et la partie d'électrode de l'électrode de référence, l'espace du trou proche du bord qui n'est pas rempli par le fil de platine est mis en contact avec une soudure de verre, le capteur est calciné une deuxième fois entre 800 et 1400°C avec oxydation, il s'ensuit que la soudure de verre se transforme par frittage en un verre, qui remplit le reste du trou proche du bord de manière étanche aux gaz, au moins 30% de la surface du capteur ne présentant aucun trou sont recouverts d'une couche mince de la pâte contenant du platine (B) et le capteur est calciné une troisième fois entre 800 et 1000°C avec oxydation, à la suite de quoi la pâte contenant du platine (B) se transforme par frittage en une électrode de mesure conductrice.

7. Procédé pour la fabrication d'un capteur d'oxygène selon la revendication 1, caractérisé en ce qu'une masse fondue de feuille céramique liquide, qui contient du dioxyde de zirconium finement divisé et des substances dopantes inorganiques ainsi que des additifs organiques, est coulée sur un support plan avec une épaisseur de couche uniforme, et une épaisseur de film de 0,2 à 2 mm est ainsi réalisée, que le film est séché et détaché du support, et que plusieurs cartes de dimensions approximativement identiques, qui correspondent approximativement aux dimensions du capteur extérieur, sont découpées par matriçage à partir du film séché, un trou est pratiqué par perforation au moins dans une première carte proche du bord et une piste constituée d'une pâte contenant du platine (B) se prolongeant à partir du trou jusqu'à la zone médiane de la carte est déposée sur une surface d'une première carte, dans la zone médiane de la carte au-dessus de la piste traversante il est déposé une pâte (C ou D), qui au cours d'une calcination oxydante est transférée dans un étalon interne, sur cette surface il est déposé au moins une deuxième carte, qui présente dans la zone médiane un trou de sorte qu'elle entoure la pâte (C ou D) pour l'étalon interne, sur ces cartes il est déposé au moins une troisième carte non trouée, de façon à recouvrir partiellement la zone médiane de pâte (C ou D), au moins 30% de la surface de la carte non perforée se trouvant à l'extérieur sont recouverts d'une couche mince de la pâte contenant du platine (B), une certaine quantité d'une pâte (A) contenant du platine est introduite dans le trou proche du bord de la première carte près de la deuxième carte voisine puis un fil de platine, dont la section remplit environ 10 à 80% de la surface du trou proche du bord, est introduit dans cette pâte (A), cette construction de cartes est calcinée entre 1400 et 1600°C avec oxydation, il s'ensuit que les cartes se réunissent par frittage en un capteur à base d'oxyde de zirconium et la piste traversante de la pâte contenant du platine (B) forme une piste conductrice et la partie d'électrode de l'électrode de référence et la pâte contenant du platine (B) se transforme par frittage en une électrode de mesure conductrice, l'espace du trou proche du bord non rempli par le fil de platine est mis en contact avec une soudure de verre, le capteur est calciné une deuxième fois avec oxydation entre 800 et 1400°C, à la suite de quoi la soudure de verre se transforme en un verre par frittage, qui remplit le reste du trou proche du bord de manière étanche aux gaz.

8. Procédé selon la revendication 6 ou 7, caractérisé en ce que des pâtes contenant du platine sont utilisées qui comprennent de plus du dioxyde de zirconium, en particulier à raison d'une quantité comprise entre 5 et 20% en poids, de manière particulièrement préférée comprise entre 7 et 15% en poids, par rapport au poids total de la pâte contenant le platine.

9. Procédé selon la revendication 6 ou 7, caractérisé en ce qu'une pâte est utilisée pour l'étalon interne, qui contient une proportion de 5 à 20% en poids, de préférence 7 à 15% en poids, par rapport au poids total de la partie non volatile de la pâte, de dioxyde de zirconium qui est utilisé pour la fabrication de la masse fondue de feuille, y compris des substances dopantes inorganiques.

10. Procédé selon la revendication 6 ou 7, caractérisé en ce que la surface conductrice de l'électrode de mesure est recouverte partiellement d'une couche de protection mince poreuse constituée d'une matière céramique non conductrice.
